Europäisches Patentamt

European Patent Office

Office européen des brevets

(19)

(11) Veröffentlichungsnummer: **0 148 528**
**B1**

(12) # EUROPÄISCHE PATENTSCHRIFT

(45) Veröffentlichungstag der Patentschrift:
08.03.89

(51) Int. Cl.⁴: **G 06 F 15/64**

(21) Anmeldenummer: **84201868.1**

(22) Anmeldetag: **14.12.84**

(54) **Verfahren und Schaltungsanordnung zum Erhöhen der Auflösung eines digitalisierten, zeitabhängigen Signals.**

(30) Priorität: **23.12.83 DE 3346570**

(43) Veröffentlichungstag der Anmeldung:
**17.07.85 Patentblatt 85/29**

(45) Bekanntmachung des Hinweises auf die Patenterteilung:
**08.03.89 Patentblatt 89/10**

(84) Benannte Vertragsstaaten:
**DE FR GB IT**

(56) Entgegenhaltungen:
**US-A-3 449 742**

**PATENTS ABSTRACTS OF JAPAN, Band 7, Nr. 84 (E-169) 1229 , 8. April 1983; & JP - A - 58 10 958**

(73) Patentinhaber: **Philips Patentverwaltung GmbH, Wendenstrasse 35 Postfach 10 51 49, D-2000 Hamburg 1 (DE)**
(84) Benannte Vertragsstaaten: **DE**

(73) Patentinhaber: **N.V. Philips' Gloeilampenfabrieken, Groenewoudseweg 1, NL- 5621 BA Eindhoven (NL)**
(84) Benannte Vertragsstaaten: **FR GB IT**

(72) Erfinder: **Demmer, Walter Heinrich, Sorthmannweg 15, 2000 Hamburg (DE)**

(74) Vertreter: **Hartmann, Heinrich, Dipl.- Ing., Philips Patentverwaltung GmbH Wendenstrasse 35 Postfach 10 51 49, D-2000 Hamburg 1 (DE)**

EP 0 148 528 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Verfahren zum Erhöhen der Auflösung eines digitalisierten, zeitabhängigen Signals, insbesondere eines digitalen Bildsignals, das aus einer Folge von Abtastwerten besteht, in dem zu einem Abtastwert aus diesem und wenigstens einem nachfolgenden und/oder voraufgehenden Abtastwert ein zugehörender Mittelwert mit höherer Auflösung gebildet und der Abtastwert durch den zugehörenden Mittelwert ersetzt wird, sowie eine Anordnung zur Durchführung des Verfahrens.

In der eropäischen Patentanmeldung mit der Veröffentlichungsnummer EP-A-0 118 960, die als Stand der Technik nach Artikel 54 (3) gilt, wurde eine Schaltungsanordung zum Umwandeln eines analogen Bildsignals in ein amplitudendiskretes Ausgangssignal vorgeschlagen, in der ein analoges Signal mit einer Anzahl von gleichbeabstandeten Referenzwerten verglichen wird. Die Auflösung dieses Analog-Digital-Umsetzers wird dadurch erhöht, daß die Referenzwerte einerseits und das analoge Signal andererseits zwischen den Umsetzschritten für aufeinander folgende Bildpunkte gegeneinander verschoben werden. Die in den jeweiligen Umsetzschritten erhaltenen amplitudendiskreten Signale werden gemittelt und ein dem auf diese Weise erhaltenen Mittelwert entsprechender optischer Wert wird auf einer Bildwiedergabeanordnug dargestellt.

Die in der EP-A-0 118 960 vorgeschlagene Anordnung hat den Nachteil, daß scharfe Kanten oder feine Strukturen im Bild, d. h. starke räumliche Kontraständerungen, verschliffen werden. Dieses Verschleifen der Konturen rührt daher, daß durch die vorgenommene Mittelung die räumliche bzw. zeitliche Änderungsfrequenz des Bildsignals beschränkt wird.

Bei derartigen Schaltungsanordnungen zum Umwandeln analoger Signale in amplitudendiskrete Signale entsteht der weitaus bedeutendste Schaltungsaufwand im Analog-Digital-Umsetzer, der das analoge Signal in ein amplitudendiskretes (digitales) Signal hoher Auflösung umsetzt. Mit zunehmenden Anforderungen an die Auflösung des digitalen Signals steigt der Schaltungsaufwand drastisch an. Es wird daher der Weg beschritten, die Auflösung der Analog-Digital-Umsetzer so gering wie möglich zu halten und die Auflösung in einer dem Analog-Digital-Umsetzer nachgeschalteten Anordnung zu erhöhen. Die bei der Umsetzung des analogen Signals mit nur grober Auflösung verlorengegangene Information über den tatsächlichen Wert des analogen Signals wird dabei aus einer Mittelung über mehrere Abtastwerte des digitalen Signals zurückgewonnen. Bei einer derartigen Mittelung geht grundsätzlich Signalinformation über Anteile hoher Signalfrequenzen zugunsten der nachträglich gewonnenen Information über die Auflösung verloren. Handelt es sich bei dem digitalen Signal um ein Bildsignal, bedeutet das ein Verschleifen der feinen Bildkonturen oder der Helligkeits- bzw. Farbsprünge.

Die Erfindung hat die Aufgabe, ein Verfahren zum Erhöhen der Auflösung eines digitalisierten, zeitabhängigen Signals sowie eine Schaltungsanordnung zur Durchführung des Verfahrens zu schaffen, die ein Verschleifen schneller Signaländerungen, beispielsweise steiler Signalflanken, vermeiden, durch die somit auch schnelle Signaländerungen trotz Erhöhung der Auflösung des Signals unverfälscht übertragen werden, bei gleichzeitiger Minimierung des Schaltungsaufwandes.

Die Aufgabe wird erfindungsgemäß dadurch gelöst, daß in einem Verfahren der eingangs genannten Art ein Abtastwert nur dann durch den zugehörenden Mittelwert ersetzt wird, wenn diese beiden Werte höchstens um einen vorgegebenen Betrag voneinander abweichen.

Der Erfindung liegt die Erkenntnis zugrunde, daß sich eine geringe Auflösung des digitalen Signals besonders in niederfrequenten Signalanteilen bemerkbar macht. Dies gilt auch nur dann, wenn die niederfrequenten Signalanteile nicht zusätzlich von Signalanteilen höherer Frequenz und ausgeprägter Amplitude überlagert sind. Beispielsweise in einem Bildsignal, insbesondere einem Fernsehsignal, werden bei grober Auflösung Stufen in der Helligkeit oder der Farbe des Bildes bevorzugt in Teilen des Bildes sichtbar, in denen Helligkeit oder Farbe räumlich nur gering variieren. In Bildbereichen mit starken Helligkeits- oder Farbübergängen nimmt die Sichtbarkeit der Stufen stark ab.

Demgemäß besteht die Maßnahme nach der Erfindung darin, die Auflösung des digitalen Signals nur in Zeitintervallen zu erhöhen, in denen das zeitabhängige Signal lediglich niederfrequente Signalanteile aufweist. Durch die Mittelung gehen dabei keine Signalanteile mit höherer Frequenz verloren. In Zeitintervallen, in denen dagegen starke Schwankungen des Signals auftreten, wird das Signal unverändert belassen. Der Analog-Digital-Umsetzer liefert ein digitalisiertes Signal, dessen Auflösung den Anforderungen für ein stark schwankendes Signal angepaßt ist. In Zeitintervallen, in denen das Signal nur geringe Änderungen aufweist, wird dann die Auflösung gezielt durch Mittelung der Abtastwerte und Ersetzen derselben durch die Mittelwerte erhöht.

Das erfindungsgemäße Verfahren hat den Vorteil, die Auflösung eines digitalisierten, zeitabhängigen Signals dort zu erhöhen, wo eine hohe Auflösung erforderlich ist, dabei aber schnelle Signaländerungen unverfälscht zu belassen, wo diese den dominierenden Anteil im Signal ausmachen. Zwar bedeutet eine (nachträgliche) Erhöhung der Auflösung des digitalen Signals stets einen gewissen Schaltungsaufwand, jedoch liegt dieser im Bereich der Verarbeitung des digitalen Signals und läßt sich damit gering halten. Bei der Anwendung des erfindungsgemäßen Verfahrens ist es jedoch möglich, einen Analog-Digital-Umsetzer mit geringer Auflösung einzusetzen, d. h. mit einer Auflösung, die den Mindestanforderungen an die Auflösung für eine weitere Verarbeitung des digitalen Signals genügt. Gegenüber einem Analog-Digital-Umsetzer, dessen Auflösung auch den höchsten auftretenden Anforderungen genügt, ergibt sich eine beträchtliche Reduzierung des Schaltungsaufwandes für die Verarbeitung des analogen Signals. Das bedeutet nicht nur eine Einsparung an Bauteilen, sondern auch an Abgleichaufwand.

An dieser Stelle sei bemerkt, daß in der europäischen Patentanmeldung mit der Veröffentlichtunnummer EP-A-0 104 689, die als Stand der Tehnik gemäß Artikel 54 (3) gilt, eine Schaltungsanordnung zum Umwandeln eines analogen Videosignals in ein digitales Videosignal vorgeschlagen wurde, in dem die höherwertigen Stellen des digitalen Videosignals aus einem Analog-Digital-Umsetzer und einem diesem nachgeschalteten Zähler abgeleitet werden. Die niederwertigen Stellen des digitalen Videosignals, die zur Erhöhung der Auflösung des vom Analog-Digital-Umsetzer gelieferten Signals dienen, werden in einem weiteren Analog-Digital-Umsetzer erzeugt, dem einerseits das ursprüngliche analoge Videosignal und andererseits das Ausgangssignal eines Digital-Analog-Umsetzers zugeführt werden, der aus sämtlichen Stellen des digitalen Videosignals ein analoges Signal rückwandelt. Bei Schwankungen des ursprünglichen analogen Videosignals wird der Wert des digitalen Videosignals durch Anpassen der niederwertigen Stellen, d. h. Minimieren der Differenz zwischen dem ursprünglichen analogen Videosignal und dem rückgewandelten analogen Videosignal, sowie durch Aufwärts- oder Abwärtszählen des Zählers und damit hervorgerufene Veränderung der vom Zähler abgegebenen höherwertigen Stellen dem ursprünglichen analogen Videosignal nachgeführt. Übersteigen die Schwankungen im ursprünglichen analogen Videosignal einen bestimmten Schwellenwert, werden die vom Analog-Digital-Umsetzer abgegebenen höherwertigen Stellen unmittelbar als digitales Videosignal abgegeben und gleichzeitig die niederwertigen Stellen auf vorgegebene Werte gesetzt.

Nach einer weiteren Ausgestaltung des erfindungsgemäßen Verfahrens wird der Mittelwert durch Tiefpaßfilterung gewonnen. Die Tiefpaßfilterung ist sowohl bei der Bearbeitung von analogen als auch von digitalen Signalen ein besonders einfaches Verfahren, das auch für hohe Folgefrequenzen der Abtastwerte einsetzbar ist.

Nach einer weiteren Ausbildung der Erfindung liegen die Abtastwerte als mehrstellige Dualzahlen darstellende Signale vor. Grundsätzlich können die Abtastwerte auch auf andere, an sich bekannte Weise codiert sein, beispielsweise im BCD-Code. Eine Codierung in der Form von Dualworten liefert jedoch besonders einfache und leicht zu verarbeitende Signale.

Nach einer anderen Fortbildung des erfindungsgemäßen Verfahrens werden eine für ein gewünschtes Mindestmaß der Auflösung des digitalisierten Signals erforderliche Anzahl führender Stellen der Dualzahlen darstellenden Signale den Abtastwerten und zur Erhöhung der Auflösung vorgesehene, den führenden Stellen folgende Stellen aus den Mittelwerten entnommen.

Dieser Fortbildung des erfindungsgemäßen Verfahrens liegt die Erkenntnis zugrunde, daß ein Abtastwert und der zugehörige Mittelwert wenigstens in einer Anzahl führender Stellen der Dualzahlen darstellenden Signale übereinstimmen, wenn diese beiden Werte höchstens um einen vorgegebenen Betrag voneinander abweichen sollen. Es ist in diesem Fall unerheblich, ob die genannte Anzahl führender Stellen dann von den Abtastwerten oder den zugehörigen Mittelwerten abgeleitet wird. Andererseits wird ein Abtastwert nur bei Abweichung um einen vorgegebenen Betrag von seinem zugehörigen Mittelwert durch diesen ersetzt. Dann können ohne Verfälschung des digitalisierten Signals die führenden Stellen stets den Abtastwerten und die den führenden Stellen folgenden Stellen den Mittelwerten entnommen werden. Dadurch wird der Vorteil erhalten, daß das digitalisierte Signal stets schnellen Signaländerungen, die sich in Änderungen der führenden Stellen bemerkbar machen, folgt und daß zugleich seine Auflösung erhöht wird, bei zusätzlich verringertem Aufwand für die Verarbeitung der Abtastwerte, d. h. die Verarbeitung der führenden Stellen der Dualzahlen darstellenden Signale.

Eine Schaltungsanordnung zur Durchführung des erfindungsgemäßen Verfahrens ist gekennzeichnet durch ein Tiefpaßfilter, dem die Abtastwerte des digitalisierten Signals zugeführt werden und das zugehörende, aus einander folgenden Abtastwerten gebildete Mittelwerte abgibt, ein Laufzeitglied, dem die Abtastwerte des digitalisierten Signals zugeführt werden und in dem sie um eine Laufzeit verzögert werden, die wenigstens nahezu der Gruppenlaufzeit des Tiefpaßfilters entspricht, eine Rechenschaltung, der die Mittelwerte vom Tiefpaßfilter und die verzögerten Abtastwerte vom Laufzeitglied zugeleitet werden und die ein von der Abweichung der Mittelwerte von den zugehörigen Abtastwerten abhängiges Schaltsignal abgibt, und ein Umschaltglied, das, vom Schaltsignal der Rechenschaltung gesteuert, die verzögerten Abtastwerte vom Laufzeitglied einer nachfolgenden Schaltungsanordnung zuführt, wenn die Mittelwerte vom Tiefpaßfilter und die verzögerten Abtastwerte vom Laufzeitglied um mehr als einen vorgebbaren Betrag voneinander abweichen, und sonst die Mittelwerte der nachfolgenden Schaltungsanordnung zuführt.

Die beschriebene Schaltungsanordnung ist vollkommen als digitale Schaltung aufgebaut und damit abgleichfrei. Sie ist in sehr kompakter Form auf einem Halbleiterplättchen integrierbar. Der durch sie hervorgerufene Schaltungsaufwand ist gering. Insbesondere werden Tiefpaßfilter und Laufzeitglied sowohl zur Erkennung einer Abweichung zwischen den Abtastwerten und den zugehörenden Mittelwerten als auch zur Bereitstellung in der Auflösung erhöhter Signale benutzt.

In einer Fortbildung der Erfindung wird das Tiefpaßfilter durch das Schaltsignal derart gesteuert, daß die Abtastwerte die entsprechenden Stellen der Mittelwerte ersetzen. Durch eine derartige Steuerung können beispielsweise beim Auftreten großer Abweichungen zwischen den Abtastwerten und den zugehörenden Mittelwerten die letzteren den Abtastwerten angepaßt werden. Dies ist insbesondere dann von Vorteil, wenn das digitalisierte Signal außer niederfrequenten Anteilen nur vereinzelte, steile Signalflanken aufweist. In einem solchen Fall soll die Auflösung des Signals unmittelbar vor und hinter der Flanke erhöht werden. Um ein Verschleifen der Signalflanke zu vermeiden, dürfen die zu den Abtastwerten unmittelbar vor und hinter der Flanke gehörenden Mittelwerte nicht wesentlich von den Abtastwerten abweichen.

Eine andere Schaltungsanordnung zur Durchführung des erfindungsgemäßen Verfahrens ist gekennzeichnet durch ein Tiefpaßfilter, dem die Abtastwerte des digitalisierten Signals zugeführt werden und das zugehörende, aus einander folgenden Abtastwerten gebildete Mittelwerte abgibt, und ein Laufzeitglied, dem die Abtastwerte des digitalisierten Signals zugeführt werden und in dem sie um eine Laufzeit verzögert werden, die wenigstens nahezu der Gruppenlaufzeit des Tiefpaßfilters entspricht, wobei von den Signalen, die Dualzahlen darstellen und in der Auflösung erhöht sind, die führenden Stellen, die für das gewünschte Mindestmaß der Auflösung des digitalisierten Signals erforderlich sind, den entsprechenden führenden Stellen der vom Laufzeitglied abgegebenen Abtastwerte entnommen werden und die diesen führenden Stellen folgenden Stellen den entsprechenden folgenden Stellen der vom Tiefpaßfilter abgegebenen Mittelwerte entnommen werden.

Eine derartige Schaltungsanordnung wird zur Durchführung der Fortbildung des erfindungsgemäßen Verfahrens eingesetzt, bei der die führenden Stellen der Dualzahlen darstellenden Signale den Abtastwerten und den führenden Stellen folgende Stellen aus den Mittelwerten entnommen werden. Da die Herkunft bzw. Ableitung der einzelnen Stellen der Dualzahlen darstellenden Signale festgelegt ist, kann ein Umschaltglied zum Umschalten zwischen den Abtastwerten und den Mittelwerten entfallen. Dadurch wird der Schaltungsaufwand verringert.

Nach einer Fortbildung der Erfindung weist die vorstehend genannte Schaltungsanordnung eine Vergleichsschaltung auf, der die verzögerten Abtastwerte vom Laufzeitglied und die Mittelwerte vom Tiefpaßfilter zugeleitet werden und die ein Vergleichssignal abgibt, durch das das Tiefpaßfilter derart gesteuert wird, daß die Mittelwerte mit den zugehörenden Abtastwerten in den für das Mindestmaß der Auflösung erforderlichen führenden Stellen der Dualzahlen übereinstimmen. Eine derartige Vergleichsschaltung stellt eine besondere, vereinfachte Ausbildung der vorstehend genannten Rechenschaltung dar, in der anstelle einer Bestimmung der Abweichung zweier zugeführter Werte nur noch deren Übereinstimmung in einer bestimmten Anzahl führender Stellen überprüft wird. Eine derartige Vergleichsschaltung läßt sich durch eine sehr einfache Gatteranordnung aufbauen.

Nach einer weiteren Fortbildung der erfindungsgemäßen Schaltungsanordnungen umfaßt das Tiefpaßfilter eine Verzögerungsanordnung mit einem Eingang, dem die Abtastwerte zugeführt werden, und einem Ausgang, der um einen Mittelungszeitraum verzögerte Abtastwerte abgibt, ein Subtrahierglied, dessen positivem Eingang die Abtastwerte und dessen negativem Eingang die um einen Mittelungszeitraum verzögerten Abtastwerte zugeführt werden und das aus den zugeführten Werten Differenzwerte bildet, sowie eine Akkumulationseinrichtung, in der die Differenzwerte aufsummiert werden.

Dieser Ausbildung des Tiefpaßfilters liegt die Erkenntnis zugrunde, daß es nicht erforderlich ist, zur Bildung eines Mittelwertes (entsprechend einem von hochfrequenten Anteilen befreiten zeitabhängigen Signal) aus einander folgenden Abtastwerten diese alle zur Bildung eines jeden Mittelwertes aufzusummieren. Vielmehr werden sich die zu zwei aufeinander folgenden Abtastwerten gehörenden Mittelwerte lediglich darin unterscheiden, daß der oder die zeitlich ersten Abtastwerte der Summe durch einen bzw. mehrere, auf die bisher aufsummierten Werte folgende Abtastwerte ersetzt werden. Dementsprechend kann ein Mittelwert unmittelbar aus dem ihm voraufgehenden Mittelwert dadurch gewonnen werden, daß zu dem voraufgehenden Mittelwert die Differenz zweier um einen Mittelungszeitraum verzögerter Abtastwerte addiert wird.

Ein dementsprechend ausgebildetes Tiefpaßfilter ist sehr einfach aufgebaut, da es mit nur einem Subtrahierglied sowie einer Akkumulationseinrichtung anstelle der sonst erforderlichen Vielzahl von schaltungstechnisch aufwendigen Addierern auskommt.

Nach einer Weiterbildung der Erfindung wird das Laufzeitglied von einem Teil der Verzögerungsanordnung gebildet. Durch eine derartige Doppelausnutzung von Baugruppen kann eine weitere Schaltungsvereinfachung erzielt werden.

Nach einer anderen Fortbildung der erfindungsgemäßen Schaltungsanordnung weist die in an sich bekannter Weise aus einer über ein Addierglied rückgekoppelten Speicheranordnung gebildete Akkumulationseinrichtung ein zweites Umschaltglied auf, das in die vom Addierglied zur Speicheranordnung verlaufende Zuführung eingefügt ist und durch das der Speicheranordnung abhängig von der Abweichung der Abtastwerte von den zugehörenden Mittelwerten das vom Addierglied abgegebene Summensignal oder die vom Laufzeitglied verzögerten Abtastwerte zugeführt werden. Mit diesem zweiten Umschaltglied kann das Tiefpaßfilter in einfacher Weise derart gesteuert werden, daß insbesondere bei schnellen Signaländerungen, beispielsweise steilen Signalflanken, eine rasche Annäherung der vom Tiefpaßfilter abgegebenen Mittelwerte an die Abtastwerte erfolgt.

Nach einer weiteren Fortbildung der Erfindung wird dem zweiten Umschaltglied nur die Anzahl führender Stellen des vom Addierglied abgegebenen Summensignals zugeführt, die gleich der Anzahl der Stellen der vom Laufzeitglied verzögerten Abtastwerte ist, und werden die folgenden Stellen des Summensignals unmittelbar der Speicheranordnung zugeleitet. Das zweite Umschaltglied führt somit entweder die verzögerten Abtastwerte oder die führenden Stellen des Summensignals der Speicheranordnung derart zu, daß diese Werte bzw. Stellen als führende Stellen der in der Speicheranordnung gespeicherten Werte auftreten. Auf diese Weise werden die Abtastwerte mit größtmöglichem Einfluß auf den Inhalt der Speicheranordnung und damit auf die vom Tiefpaßfilter abgegebenen Signale der Speicheranordnung zugeführt und gleichzeitig der Schaltungsaufwand für das Umschaltglied reduziert.

In einer anderen Weiterbildung der Erfindung werden die in der Akkumulationseinrichtung aufsummierten Signale von dieser über ein Dividierglied als Mittelwerte vom Tiefpaßfilter abgegeben. In diesem Dividierglied wird das in der Speicheranordnung gespeicherte Summensignal durch die Anzahl der aufsummierten Abtastwerte zwecks Mittelwertbildung dividiert.

Nach einer anderen Ausgestaltung der Erfindung werden die in der Akkumulationseinrichtung aufsummierten Signale nur mit einer Anzahl führender Stellen, die gleich der Anzahl der Stellen der Abtastwerte ist, vermehrt um eine Anzahl zusätzlicher Stellen zur Erhöhung der Auflösung, als Mittelwerte vom Tiefpaßfilter abgegeben. Bei Dualzahlen darstellenden Signalen beispielsweise entspricht das einer Division durch die Potenz der Zahl 2, die der Stelle det aufsummierten Signale zugeordnet ist, die als letzte Stelle der Mittelwerte erscheint. Auf diese Weise wird eine Division onne zusätzliche Schaltungselemente vorgenommen.

Nach einer anderen Fortbildung der Erfindung werden die von der Akkumulationseinrichtung abgegebenen Signale über ein weiteres Tiefpaßglied als Mittelwerte vom Tiefpaßfilter abgegeben. Das weitere Tiefpaßglied umfaßt vorzugsweise ein weiteres Addierglied, dem die seinem ersten Eingang zugeführten Signale auch seinem zweiten Eingang um eine weitere Laufzeit verzögert zugeführt werden und dessen Ausgang das Ausgangssignal des weiteren Tiefpaßgliedes entnommen wird. Das weitere Tiefpaßglied dient einem Ausgleich der Signallaufzeiten des Tiefpaßfilters einerseits und des Laufzeitgliedes andererseits.

Die Erfindung wird im folgenden anhand von in der Zeichnung dargestellten Ausführungsbeispielen näher erläutert. Es zeigen

Fig. 1 ein Blockschaltbild für eine Schaltungsanordnung nach der Erfindung,
Fig. 2a ein etwas ausführlicheres Blockschaltbild einer weiteren Schaltungsanordnung nach der Erfindung,
Fig. 2b eine Abwandlung eines Teils der Schaltungsanordnung nach Fig. 2a,
Fig. 2c eine Abwandlung eines anderen Teils der Schaltungsanordnung nach Fig. 2a.

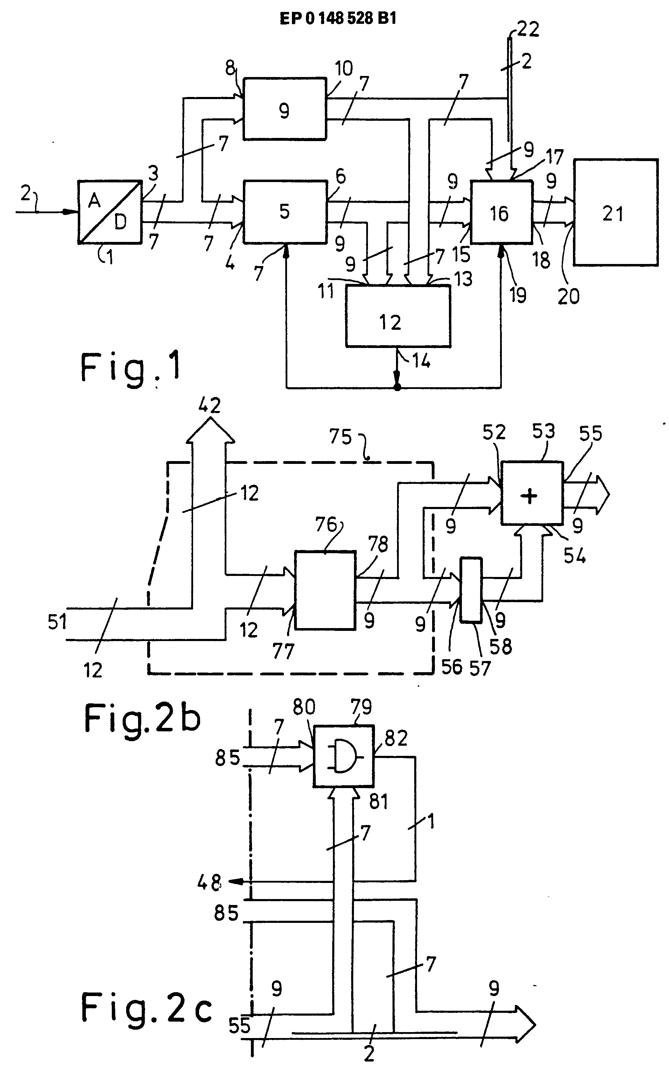

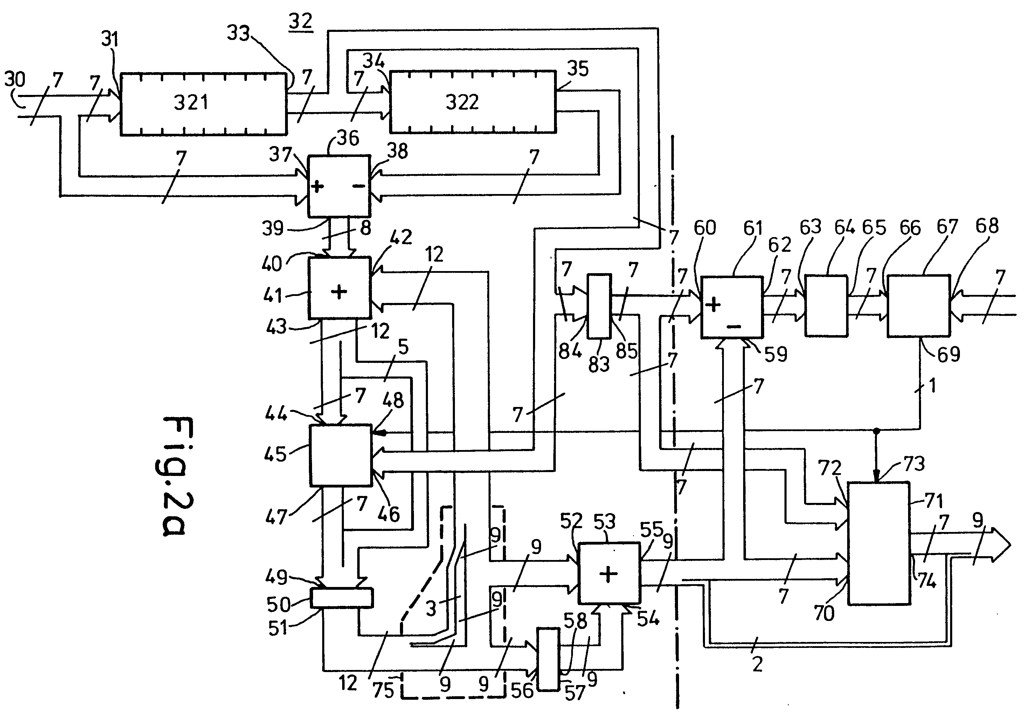

In der Schaltungsanordnung nach Fig. 1 wird einem Analog-Digital-Umsetzer 1 an einem Analogeingang 2 ein analoges, zeitabhängiges Signal zugeleitet. Das analoge Signal wird im Analog-Digital-Umsetzer in bekannter Weise zu einer Folge von Zeitpunkten abgetastet, deren Wiederholungsfrequenz beispielsweise durch ein Taktsignal bestimmt wird, das dem Analog-Digital-Umsetzer über eine in Fig. 1 nicht dargestellte Taktleitung zugeführt wird. Am Ausgang 3 des Analog-Digital-Umsetzers 1 erscheint dann ein digitalisiertes, zeitabhängiges Signal, das aus einer Folge von Abtastwerten besteht. Die Abtastwerte liegen in der Form mehrstelliger, Dualzahlen darstellender Signale vor und werden über Mehrfachleitungen, in denen für jede Stelle ein Leiter vorgesehen ist, weitergeleitet. Im vorliegenden Beispiel hat die vom Analog-Digital-Umsetzer abgegebene Dualzahl sieben Stellen, der Ausgang 3 entsprechend sieben Anschlüsse für sieben Leiter.

Die vom Ausgang 3 des Analog-Digital-Umsetzers abgegebenen Signale (Abtastwerte) können ebenso in einer anderen Form codiert sein, beispielsweise im BCD-Code, usw. Die Schaltungsanordnung ist dann entsprechend anzupassen.

Vom Ausgang 3 des Analog-Digital-Umsetzers werden die Abtastwerte einerseits einem Eingang 4 eines Tiefpaßfilters 5 und andererseits einem Eingang 8 eines Laufzeitgliedes 9 zugeführt. Das Tiefpaßfilter 5 ist z. B. in bekannter Weise als digitales Filter ausgeführt. Eine verbesserte Ausführungsform wird in Fig. 2 dargestellt. Das Laufzeitglied 9 ist beispielsweise als getaktetes Schieberegister ausgeführt.

Im Tiefpaßfilter 5 werden aus einander folgenden, vom Ausgang 3 des Analog-Digital-Umsetzers 1 zugeführten Abtastwerten Mittelwerte gebildet und an einem Ausgang 6 vom Tiefpaßfilter 5 abgegeben. Durch die Mittelwertbildung ist die Auflösung det Signale am Ausgang 6 beispielsweise um zwei Stellen gegenüber den Abtastwerten auf neun Stellen erhöht worden. Entsprechend weist der Ausgang 6 des Tiefpaßfilters 5 neun Anschlüsse auf.

Über eine neunfache Leitung werden die Mittelwerte vom Ausgang 6 des Tiefpaßfilters 5 einerseits einem ersten Eingang 11 einer Rechenschaltung 12 und andererseits einem ersten Eingang 15 eines Umschaltgliedes 16 zugeführt. Entsprechend werden vom Ausgang 10 des Laufzeitgliedes 9 die um die Laufzeit des Laufzeitgliedes 9 verzögerten, ansonsten jedoch unveränderten Abtastwerte über eine siebenfache Leitung einerseits einem zweiten Eingang 13 der Rechenschaltung 12 und andererseits einem zweiten Eingang 17 des Umschaltgliedes 16 zugeleitet. Die Laufzeit des Laufzeitgliedes 9 entspricht der Gruppenlaufzeit des Tiefpaßfilters 5, so daß die verzögerten Abtastwerte und die zugehörenden Mittelwerte gleichzeitig an den Eingängen 15, 17 des Umschaltgliedes 16 anliegen. In der Rechenschaltung 12 wird die Abweichung zwischen den Abtastwerten vom Ausgang 10 des Laufzeitgliedes 9 und den Mittelwerten vom Ausgang 6 des Tiefpaßfilters 5 bestimmt. Übersteigt diese Abweichung einen bestimmten Betrag, der beispielsweise innerhalb der Rechenschaltung 12 fest vorgegeben oder auch veränderbar ist, gibt die Rechenschaltung 12 an einem Ausgang 14 ein Schaltsignal ab, das sowohl einem Schaltsignaleingang 7 des Tiefpaßfilters 5 als auch einem Umschalteingang 19 des Umschaltgliedes 16 zugeführt wird.

Das Umschaltglied 16 weist weiterhin einen Ausgang 18 auf, der beim Auftreten des Schaltsignals am Umschalteingang 19 mit dem zweiten Eingang 17 und sonst mit dem ersten Eingang 15 verbunden ist. Der Ausgang 18 des Umschaltgliedes 16 ist über eine neunfache Leitung mit einem Eingang 20 einer nachfolgenden Schaltungsanordnung 21 verbunden. Somit werden beim Anliegen eines Schaltsignals die Abtastwerte und sonst die Mittelwerte der nachfolgenden Schaltungsanordnung 21 zugeführt. Als nachfolgende Schaltungsanordnung ist jede Anordnung zum Weiterleiten, Verarbeiten, Umsetzen, Darstellen und dgl. des digitalisierten, zeitabhängigen Signals einsetzbar.

Dem zweiten Eingang 17 des Umschaltgliedes 16, der im vorliegenden Ausführungsbeispiel neun Anschlüsse aufweist, werden die Abtastwerte auf einer siebenfachen Leitung derart zugeführt, daß die Stellen der Abtastwerte den sieben führenden Stellen am Ausgang 18 des Umschaltgliedes 16 zugeordnet sind. Zum Auffüllen der verbleibenden zwei Stellen werden dem zweiten Eingang 17 des Umschaltgliedes 16 über eine Zweifachleitung 22 Füllsignale zugeleitet. Durch diese Füllsignale können die beiden niederwertigsten Stellen des zweiten Eingangs 17 des Umschaltgliedes 16 und damit bei entsprechender Verbindung die niederwertigsten Stellen des Ausgangs 18 beliebig wählbare Werte annehmen. Beispielsweise können diese Werte zu Null gesetzt oder von einem Zufallsgenerator festgelegt werden. Es ist auch möglich, diese Werte aus den niederwertigsten Stellen der vom Tiefpaßfilter 5 abgegebenen Mittelwerte abzuleiten.

Durch das dem Schaltsignaleingang 7 zugeführte Schaltsignal wird außerdem das Tiefpaßfilter 5 derart gesteuert, daß die Abtastwerte die entsprechenden Stellen der Mittelwerte ersetzen, wenn die Mittelwerte und die verzögerten Abtastwerte vom Laufzeitglied um mehr als einen vorgebbaren Betrag voneinander abweichen. Das Tiefpaßfilter wird dadurch quasi in den führenden Stellen der Dualzahlen darstellenden Mittelwerte überbrückt. Dadurch wird die Einschwingzeit des Tiefpaßfilters 5 insbesondere nach Auftreten schneller Signalsprünge verkürzt.

Die Fig. 2a zeigt ein etwas detaillerteres Blockschaltbild einer weiteren Ausführungsform der Erfindung. Das digitalisierte, zeitabhängige Signal wird über eine Leitung 30 mit beispielsweise sieben Leitern für Abtastwerte, die in der Form von siebenstellige Dualzahlen darstellenden Signalen übertragen werden, einem Eingang 31 eines ersten Teils 321 einer Verzögerungsanordnung 32 zugeführt. Der erste Teil 321 der Verzögerungsanordnung 32 besteht aus acht Verzögerungsstufen, in deren jeder die Abtastwerte jeweils um ein Zeitintervall verzögert werden, das gleich dem zeitlichen Abstand der Aufeinanderfolge je zweier Abtastwerte ist. Der erste Teil 321 der Verzögerungsanordnung 32 besteht beispielsweise aus einem achtstufigen Schieberegister für sieben parallele Bits, das mit demselben Takt betrieben wird, der auch dem Analog-Digital-Umsetzer zugeleitet wird. Am Ausgang 33 des ersten Teils 321 der Verzögerungsanordnung 32 treten somit die Abtastwerte mit einer Verzögerung um acht Abtasttaktintervalle auf.

Vom Ausgang 33 des ersten Teils 321 der Verzögerungsanordnung 32 werden die Abtastwerte über eine siebenfache Leitung einem Eingang 34 eines zweiten Teils 322 der Verzögerungsanordnung 32 zugeführt und in diesem zweiten Teil 322 noch einmal um acht Abtasttaktintervalle verzögert. Am Ausgang 35 des zweiten Teils 322 der Verzögerungsanordnung 32 treten somit die gegenüber den Signalen auf der Leitung 30 um sechzehn Abtasttaktintervalle verzögerten Abtastwerte auf.

Die unverzögerten Abtastwerte von Leitung 30 werden einem positiven Eingang 37 eines Subtrahierers 36, die verzögerten Abtastwerte vom Ausgang 35 des zweiten Teils 322 der Verzögerungsanordnung 32 einem negativen Eingang 38 des Subtrahierers 36 zugeführt. Der Subtrahierer 36 gibt an seinem Ausgang 39 die Differenz der seinen Eingängen 37, 38 zugeführten Abtastwerte ab und leitet sie über eine achtfache Leitung einem ersten Eingang 40 eines Addiergliedes 41 zu.

Das Addierglied 41 bildet zusammen mit einer Speicheranordnung 50 eine Akkumulationseinrichtung. Dazu werden die Signale, die vom Addierglied 41 an seinem Ausgang 43 abgegeben werden, einem Eingang 49 der Speicheranordnung 50 zugeleitet und in dieser gespeichert. Die gespeicherten Signale erscheinen an einem Ausgang 51 der Speicheranordnung 50 und werden von dort einem zweiten Eingang 42 des Addiergliedes 41 zugeführt. Das Addierglied 41 bildet die Summe der an seinen Eingängen 40, 42 anliegenden Signale und gibt diese an seinem Ausgang 43 ab.

Die Verzögerungsanordnung 32, der Subtrahierer 36 und die im wesentlichen Addierer 41 und Speicheranordnung 50 umfassende Akkumulationseinrichtung bilden ein sehr einfaches Tiefpaßfilter zur Bildung eines Mittelwertes aus sechzehn aufeinander folgenden Abtastwerten. Der Mittelungszeitraum, um den die Abtastwerte in der Verzögerungsanordnung 32 verzögert werden, beträgt bei dieser Anordnung somit fünfzehn Abtasttaktintervalle. Die Gruppenlaufzeit des Tiefpaßfilters ist gleich der Hälfte des Mittelungszeitraums und beträgt somit siebeneinhalb Abtasttaktintervalle. Die in der Akkumulationseinrichtung aufsummierten Abtastwerte werden zum Bilden des Mittelwertes durch die Zahl 16 dividiert. Da hierfür aufgrund der Struktur der Dualzahlen darstellenden Signale kein gesondertes Dividierglied erforderlich ist, wird eine weitere Vereinfachung erzielt.

Diese an sich bekannte Akkumulationseinrichtung ist bei dem in Fig. 2a dargestellten Ausführungsbeispiel durch ein zweites Umschaltglied 45 erweitert, das in die Leitung zwischen dem Ausgang 43 des Addiergliedes 41 und dem Eingang 49 der Speicheranordnung 50 eingefügt ist. Das zweite Umschaltglied 45 weist einen ersten Eingang 44 auf, dem die sieben führenden Stellen vom insgesamt zwölfstelligen Ausgang 43 des Addiergliedes 41 zugeführt werden. Von einem Ausgang 47 des zweiten Umschaltgliedes 45 führt eine sieben Leiter umfassende Leitung auf die den sieben führenden Stellen der Speicheranordnung 50 zugeordneten Anschlüsse des Eingangs 49 der Speicheranordnung 50. Die den folgenden fünf Stellen entsprechenden Anschlüsse des Ausgangs 43 des Addiergliedes 41 sind unmittelbar mit den entsprechenden Anschlüssen des Eingangs 49 der Speicheranordnung 50 verbunden.

Das zweite Umschaltglied 45 weist ferner einen zweiten Eingang 46 auf, dem vom Ausgang 33 des ersten Teils 321 der Verzögerungsanordnung 32 die um acht Abtasttaktintervalle verzögerten Abtastwerte zugeführt werden. Dem zweiten Umschaltglied 45 wird ferner über einen Umschalteingang 48 ein Schaltsignal zugeleitet, durch das das zweite Umschaltglied 45 abhängig von der Abweichung der Abtastwerte von den zugehörenden Mittelwerten derart umgeschaltet werden kann, daß den den führenden Stellen zugehörenden Anschlüssen des Eingangs 49 der Speicheranordnung 50 entweder die entsprechenden führenden Stellen des vom Addierglied 41 an seinem Ausgang 43 abgegebenen Summensignals oder die um acht Abtasttaktintervalle verzögerten Abtastwerte zugeleitet werden. Im ersten Fall arbeitet die aus dem Addierglied 41 und der Speicheranordnung 50 aufgebaute Schleife als Akkumulationseinrichtung, im zweiten Fall wird der Speicherinhalt der Speicheranordnung 50 durch die von außen zugeführten Abtastwerte nachgestellt bzw. an schnelle Änderungen im zeitabhängigen Signal angepaßt.

Dadurch wird erreicht, daß der Speicherinhalt der Speicheranordnung 50 auch nach schnellen, vereinzelten Signalsprüngen sofort dem Wert des zeitabhängigen Signals nachgeführt wird, während ohne Umschalten der Speicherinhalt erst mit fortlaufender Mittelung allmählich dem Wert des zeitabhängigen Signals nachgeführt wird. Das zweite Umschaltglied 45 schaltet nur die führenden Stellen in der Anzahl der Stellen der Abtastwerte um. Den diesen folgenden Stellen im Summensignal stehen in den Abtastwerten keine Stellen gegenüber, weshalb diese folgenden Stellen unmittelbar der Speicheranordnung 50 zugeführt sind.

Von dem zwölfstellige Dualzahlen darstellenden Signal am Ausgang 51 der Speicheranordnung 50 werden die neun führenden Stellen einerseits einem ersten Eingang 52 eines weiteren Addiergliedes 53 und andererseits einem Eingang 56 einer weiteren Verzögerungsanordnung 57 zugeführt. Das in der weiteren Verzögerungsanordnung 57 um ein Abtasttaktintervall verzögerte Signal vom Eingang 56 wird an einem Ausgang 58 abgegeben und über eine neunfache Leitung einem zweiten Eingang 54 des weiteren Addiergliedes 53 zugeleitet. Die Summe der Signale an seinen Eingängen 52, 54 wird von dem weiteren Addierglied 53 an einem Ausgang 55 abgegeben. Das weitere Addierglied 53 und die weitere Verzögerungsanordnung 57 bilden zusammen ein weiteres Tiefpaßglied. Die Gruppenlaufzeit dieses weiteren Tiefpaßgliedes 53, 57 zwischen dem Ausgang 51 der Speicheranordnung 50 und dem Ausgang 55 des weiteren Addiergliedes 53 beträgt ein halbes Abtasttaktintervall. Mit der Verzögerung durch die Speicheranordnung 50 um ein ganzes Abtasttaktintervall und der Gruppenlaufzeit von Verzögerungsanordnung 32 und Subtrahierer 36 ergibt sich eine Verzögerung am Ausgang 55 gegenüber der Leitung 30 von neun Abtasttaktintervallen.

Von den neunstellige Dualzahlen darstellenden Signalen am Ausgang 55 des weiteren Addiergliedes 53 werden die führenden sieben Stellen einem negativen Eingang 59 und die um neun Abtasttaktintervalle entsprechend der Gruppenlaufzeit des Tiefpaßfilters 32, 36, 41, 45, 50, 53, 57 verzögerten Abtastwerte einem positiven Eingang 60 eines zweiten Subtrahierers 61 zugeführt. Die verzögerten Abtastwerte werden dazu dem Ausgang 85 einer dritten Verzögerungsanordnung 83 entnommen, deren Eingang 84 mit dem Ausgang 33 des ersten Teils 321 der Verzögerungsanordnung 32 verbunden ist. In einer Abwandlung dieser Anordnung ist aus dem zweiten Teil 322 der Verzögerungsanordnung 32 nach der ersten Verzögerungsstufe hinter dem Eingang 34 eine Anzapfung mit sieben Leitern herausgeführt und mit dem Eingang 60 des Subtrahierers 61 verbunden. Die dritte Verzögerungsanordnung 83 kann dann entfallen.

Die am Ausgang 62 des Subtrahierers 61 auftretende Differenz der den Eingängen 59, 60 zugeführten Signale wird einem Eingang 63 einer betragbildenden Stufe 64 zugeleitet, die an ihrem Ausgang 65 den Betrag des ihrem Eingang 63 zugeleiteten Signals abgibt.

Vom Ausgang 65 der betragbildenden Stufe 64 gelangt das den Betrag der Differenz zwischen den verzögerten Abtastwerten und den vom Ausgang 55 des weiteren Addiergliedes 53 abgegebenen Mittelwerten darstellende Signal auf einen ersten Eingang 66 einer Komparatorstufe 67, der an einem zweiten Eingang 68 ein einstellbarer Schwellenwert zugeführt wird. Die Komparatorstufe 67 vergleicht die ihren Eingängen zugeführten Signale und gibt an einem Ausgang 69 ein Schaltsignal ab, wenn das dem ersten Eingang 66 zugeführte Signal den einstellbaren Schwellenwert übersteigt. Die führenden sieben Stellen der Signale vom Ausgang 55 des weiteren Addiergliedes 53 werden weiterhin einem ersten Eingang 70 eines Umschaltgliedes 71 und die verzögerten Abtastwerte vom Ausgang 85 der dritten Verzögerungsanordnung 83 werden einem zweiten Eingang 72 des Umschaltgliedes 71 zugeleitet. Dem Umschaltglied 71 wird ferner über einen Umschalteingang 73 das Schaltsignal vom Ausgang 69 der Komparatorstufe 67 zugeführt.

Wenn der Wert des Signals am ersten Eingang 66 der Komparatorstufe 67 den dem zweiten Eingang 68 zugeführten Schwellenwert übersteigt und somit am Ausgang 69 ein Schaltsignal auftritt, wird durch dieses das Umschaltglied 71 derart umgeschaltet, daß die Signale an seinem zweiten Eingang 72 seinem Ausgang 74 zugeführt werden. Tritt kein Schaltsignal auf, ist der erste Eingang 70 mit dem Ausgang 74 verbunden. Außerdem wird beim Auftreten eines Schaltsignals am Ausgang 69 der Komparatorstufe 67 das zweite Umschaltglied derart umgeschaltet, daß sein zweiter Eingang 46 mit seinem Ausgang 47 verbunden ist, während im anderen Fall der erste Eingang 44 mit dem Ausgang 46 verbunden ist.

In dem beschriebenen Beispiel wird den Umschalteingängen 48 und 73 dasselbe Schaltsignal vom Ausgang 69 der Komparatorstufe 67 zugeleitet. Ebenso können jedoch in der Komparatorstufe 67 zwei unterschiedliche Schaltsignale erzeugt werden derart, daß beispielsweise für das Umschalten des zweiten Umschaltgliedes 45 ein anderer Schwellenwert als für das Umschalten des Umschaltgliedes 71 zugrunde gelegt wird.

Die den führenden sieben Stellen des vom Ausgang 55 des weiteren Addiergliedes 53 abgegebenen Signals folgenden zwei Stellen werden am Umschaltglied 71 vorbeigeleitet und mit den vom Umschaltglied 71 an seinem Ausgang 74 abgegebenen sieben Stellen derart zu einem neunstelligen Ausgangssignal vereinigt, daß das Signal vom Ausgang 74 dessen führende Stellen und die am Umschaltglied 71 vorbeigeleiteten Stellen die diesen führenden Stellen folgenden Stellen bilden.

Fig. 2b zeigt eine Abwandlung der in Fig. 2a gestrichelt umrahmten Auskopplung 75 der den Mittelwerten entsprechenden Signale aus der Akkumulationseinrichtung 41, 50, die in Fig. 2a einer Division durch die Zahl 16 entspricht und die in Fig. 2b für eine Division durch eine beliebige Zahl mit einem gesonderten Dividierglied 76 ausgeführt ist. Das Summensignal vom Ausgang 51 der Speicheranordnung 50 wird einem Eingang 77 des Dividiergliedes 76 zugeführt, der dividierte Wert einem Ausgang 78 des Dividiergliedes 76 entnommen und in bereits beschriebener Weise den Eingängen 52 bzw. 56 des weiteren Addiergliedes 53 bzw. der weiteren Verzögerungsanordnung 57 zugeleitet.

Fig. 2c zeigt eine Vereinfachung des rechts von der strichpunktierten Linie befindlichen Teils der in Fig. 2a dargestellten Schaltungsanordnung. Für den Fall, in dem die führenden Stellen der Dualzahlen darstellenden Signale den Abtastwerten und den führenden Stellen folgende Stellen aus den Mittelwerten entnommen werden, ohne daß ein Umschalten der führenden Stellen des einer nachfolgenden Schaltungsanordnung zugeführten Signals zwischen den Abtastwerten und den Mittelwerten erfolgt, kann ein dafür vorzusehendes Umschaltglied entfallen. Damit entfällt auch die Ermittlung eines Schaltsignals für dieses Umschaltglied. Die Stellen der verzögerten Abtastwerte vom Ausgang 85 der dritten Verzögerungsanordnung 83 werden als führende Stellen mit den letzten beiden Stellen der vom Ausgang 55 des weiteren Addiergliedes 53 abgegebenen Mittelwerte als den führenden Stellen nachfolgende Stellen zu einem neunstelligen Ausgangssignal kombiniert.

Die Abwandlung der Schaltung gemäß Fig. 2c enthält noch eine Vergleichsschaltung 79, der über einen ersten Eingang 80 die verzögerten Abtastwerte vom Ausgang 85 der dritten Verzögerungsanordnung 83 und an einem zweiten Eingang 81 die führenden sieben Stellen der vom Ausgang 55 des weiteren Addiergliedes 53 abgegebenen Mittelwerte zugeleitet werden. Stimmen die Signale an den Eingängen 80, 81 der Vergleichsschaltung 79 nicht überein, gibt diese an einem Ausgang 82 ein Vergleichssignal ab, das dem Umschalteingang 48 des zweiten Umschaltgliedes 45 zugeführt wird und durch das das Signal vom Ausgang 85 der dritten Verzögerungsanordnung 83 auf die führenden Stellen der Speicheranordnung 50 geschaltet wird.

**Patentansprüche**

1. Verfahren zum Erhöhen der Auflösung eines digitalisierten, zeitabhängigen Signals, insbesondere eines digitalen Bildsignals, das aus einer Folge von Abtastwerten besteht, in dem zu einem Abtastwert aus diesem und wenigstens einem nachfolgenden und/oder voraufgehenden Abtastwert ein zugehöriger Mittelwert mit höherer Auflösung gebildet und der Abtastwert durch den zugehörigen Mittelwert ersetzt wird,
dadurch gekennzeichnet, daß ein Abtastwert nur dann durch den zugehörigen Mittelwert ersetzt wird, wenn diese beiden Werte höchstens um einen vorgegebenen Betrag voneinander abweichen.

2. Verfahren nach Anspruch 1,
dadurch gekennzeichnet, daß der Mittelwert durch Tiefpaßfilterung gewonnen wird.

3. Verfahren nach Anspruch 1 oder 2,
dadurch gekennzeichnet, daß die Abtastwerte als mehrstellige Dualzahlen darstellende Signale vorliegen.

4. Verfahren nach Anspruch 3,
dadurch gekennzeichnet, daß eine für ein gewünschtes Mindestmaß der Auflösung des digitalisierten Signals erforderliche Anzahl führender Stellen der Dualzahlen darstellenden Signale den Abtastwerten und zur Erhöhung der Auflösung vorgesehene, den führenden Stellen folgende Stellen aus den Mittelwerten entnommen werden.

5. Schaltungsanordnung zur Durchführung des Verfahrens nach Anspruch 1,
gekennzeichnet durch
- ein Tiefpaßfilter (5; 32, 36, 41, 45, 50, 53, 57), dem die Abtastwerte des digitalisierten Signals zugeführt werden und das zugehörende, aus einander folgenden Abtastwerten gebildete Mittelwerte abgibt,
- ein Laufzeitglied (9; 321), dem die Abtastwerte des digitalisierten Signals zugeführt werden und in dem sie um eine Laufzeit verzögert werden, die wenigstens nahezu der Gruppenlaufzeit des Tiefpaßfilters (5; 32, 36, 41, 45, 50, 53, 57) entspricht,
- eine Rechenschaltung (12; 61, 64, 67), der die Mittelwerte vom Tiefpaßfilter (5; 32, 36, 41,

45, 50, 53, 57) und die verzögerten Abtastwerte vom Laufzeitglied (9; 321) zugeleitet werden und die ein von der Abweichung der Mittelwerte von den zugehörigen Abtastwerten abhängiges Schaltsignal abgibt,
- und ein Umschaltglied (16; 71), das, vom Schaltsignal der Rechenschaltung (12; 61, 64, 67) gesteuert, die verzögerten Abtastwerte vom Laufzeitglied (9; 321) einer nachfolgenden Schaltungsanordnung (21) zuführt, wenn die Mittelwerte vom Tiefpaßfilter (5; 32, 36, 41, 45, 50, 53, 57) und die verzögerten Abtastwerte vom Laufzeitglied (9, 321) um mehr als einen vorgebbaren Betrag voneinander abweichen, und sonst die Mittelwerte der nachfolgenden Schaltungsanordnung (21) zuführt.

6. Schaltungsanordnung nach Anspruch 5,
dadurch gekennzeichnet, daß das Tiefpaßfilter (5; 32, 36, 41, 45, 50, 53, 57) durch das Schaltsignal derart gesteuert wird, daß die Abtastwerte die entsprechenden Stellen der Mittelwerte ersetzen.

7. Schaltungsanordnung zur Durchführung des Verfahrens nach Anspruch 4,
gekennzeichnet durch
- ein Tiefpaßfilter (5; 32, 36, 41, 45, 50, 53, 57), dem die Abtastwerte des digitalisierten Signals zugeführt werden und das zugehörende, aus einander folgenden Abtastwerten gebildete Mittelwerte abgibt, und
- ein Laufzeitglied (9; 321), dem die Abtastwerte des digitalisierten Signals zugeführt werden und in dem sie um eine Laufzeit verzögert werden, die wenigstens nahezu der Gruppenlaufzeit des Tiefpaßfilters (5; 32, 36, 41, 45, 50, 53, 57) entspricht,
- wobei von den Signalen, die Dualzahlen darstellen und in der Auflösung erhöht sind, die führenden Stellen, die für das gewünschte Mindestmaß der Auflösung des digitalisierten Signals erforderlich sind, den entsprechenden führenden Stellen der vom Laufzeitglied (9; 321) abgegebenen Abtastwerte entnommen werden und die diesen führenden Stellen folgenden Stellen den entsprechenden folgenden Stellen der vom Tiefpaßfilter (5; 32, 36, 41, 45, 50, 53, 57) abgegebenen Mittelwerte entnommen werden.

8. Schaltungsanordnung nach Anspruch 7,
gekennzeichnet durch eine Vergleichsschaltung (79), der die verzögerten Abtastwerte vom Laufzeitglied (9; 321) und die Mittelwerte vom Tiefpaßfilter (5; 32, 36, 41, 45, 50, 53, 57) zugeleitet werden und die ein Vergleichssignal abgibt, durch das das Tiefpaßfilter (5; 32, 36, 41, 45, 50, 53, 57) derart gesteuert wird, daß die Mittelwerte mit den zugehörigen Abtastwerten in den für das Mindestmaß der Auflösung erforderlichen führenden Stellen der Dualzahlen übereinstimmen.

9. Schaltungsanordnung nach Anspruch 5 oder 7,

dadurch gekennzeichnet, daß das Tiefpaßfilter (5; 32, 36, 41, 45, 50, 53, 57) umfaßt:
- eine Verzögerungsanordnung (32) mit einem Eingang (31), dem die Abtastwerte zugeführt werden, und einem Ausgang (35), der um einen Mittelungszeitraum verzögerte Abtastwerte abgibt,
- ein Subtrahierglied (36), dessen positivem Eingang (37) die Abtastwerte und dessen negativem Eingang (38) die um einen Mittelungszeitraum verzögerten Abtastwerte zugeführt werden und das aus den zugeführten Werten Differenzwerte bildet, sowie
- eine Akkumulationseinrichtung (41, 50), in der die Differenzwerte aufsummiert werden.

10. Schaltungsanordnung nach Anspruch 9, dadurch gekennzeichnet, daß das Laufzeitglied (9; 321) von einem Teil der Verzögerungsanordnung (32) gebildet wird.

11. Schaltungsanordnung nach Anspruch 9 mit einer in an sich bekannter Weise aus einer über ein Addierglied (41) rückgekoppelten Speicheranordnung (50) gebildeten Akkumulationseinrichtung (41, 50),

gekennzeichnet durch ein zweites Umschaltglied (45), das in die vom Addierglied (41) zur Speicheranordnung (50) verlaufende Zuführung eingefügt ist und durch das der Speicheranordnung (50) abhängig von der Abweichung der Abtastwerte von den zugehörenden Mittelwerten das vom Addierglied (41)abgegebene Summensignal oder die vom Laufzeitglied (9; 321) verzögerten Abtastwerte zugeführt werden.

12. Schaltungsanordnung nach Anspruch 11, dadurch gekennzeichnet, daß dem zweiten Umschaltglied (45) nur die Anzahl führender Stellen des vom Addierglied (41) abgegebenen Summensignals zugeführt wird, die gleich der Anzahl der Stellen der vom Laufzeitglied (9; 321) verzögerten Abtastwerte ist, und daß die folgenden Stellen des Summensignals unmittelbar der Speicheranordnung (50) zugeleitet werden.

13. Schaltungsanordnung nach Anspruch 9, dadurch gekennzeichnet, daß die in der Akkumulationseinrichtung (41, 50) aufsummierten Signale von dieser über ein Dividierglied (76) als Mittelwerte vom Tiefpaßfilter (5; 32, 36, 41, 45, 50, 53, 57) abgegeben werden.

14. Schaltungsanordnung nach Anspruch 9, dadurch gekennzeichnet, daß die in der Akkumulationseinrichtung (41, 50) aufsummierten Signale nur mit einer Anzahl führender Stellen, die gleich der Anzahl der Stellen der Abtastwerte ist, vermehrt um eine Anzahl zusätzlicher Stellen zur Erhöhung der Auflösung, als Mittelwerte vom Tiefpaßfilter (5; 32, 36, 41, 45, 50, 53, 57) abgegeben werden.

15. Schaltungsanordnung nach Anspruch 9, dadurch gekennzeichnet, daß die von der Akkumulationseinrichtung (41, 50) abgegebenen Signale über ein weiteres Tiefpaßglied (53, 57) als Mittelwerte vom Tiefpaßfilter (5; 32, 36, 41, 45, 50, 53, 57) abgegeben werden.

16. Schaltungsanordnung nach Anspruch 15, dadurch gekennzeichnet, daß das weitere Tiefpaßglied (53, 57) ein weiteres Addierglied (53) umfaßt, dem die seinem ersten Eingang (52) zugeführten Signale auch seinem zweiten Eingang (54) um eine weitere Laufzeit verzögert zugeführt werden und dessen Ausgang (55) das Ausgangssignal des weiteren Tiefpaßgliedes (53, 57) entnommen wird.

**Claims**

1. A method of increasing the resolution of a digital timedependent signal, in particular a digital picture signal which consists of a sequence of sampling values, in which at one sampling value an associated mean value with higher resolution is formed from this sampling value and at least one subsequent and/or preceding sampling value and the sampling value is replaced by the associated mean value, characterized in that a sampling value is replaced by the associated mean value only when these two values do not differ from one another by more than a given value.

2. A method as claimed in Claim 1, characterized in that the mean value is obtained by low-pass filtering.

3. A method as claimed in Claim 1 or 2, characterized in that the sampling values are present in the form of multi-position signals representing binary numbers.

4. A method as claimed in Claim 3, characterized in that a number of most significant positions of the signals representing binary numbers required for a minimum desired resolution of the digitised signal are taken from the sampling values and positions following the most significant positions, intended to increase the resolution, are taken from the mean values.

5. A circuit arrangement for implementing the method as claimed in Claim 1, characterized by
- a low-pass filter (5; 32, 36, 41, 45, 50, 53, 57) to which the sampling values of the digitised signal are fed and which supplies associated mean values formed from consecutive sampling values,
- a delay member (9; 321), to which the sampling values of the digitised signal are fed and in which they are delayed by a time which corresponds at least substantially to the group delay of the low-pass filter (5; 32, 36, 41, 45, 50, 53, 57),
- an arithmetic circuit (12; 61, 64, 67) to which are fed the mean values from the low-pass filter (5; 32, 36, 41, 45, 50, 53, 57) and the delayed values from the delay member (9; 321) and which delivers a switching signal dependent on the deviation of the mean values from the associated sampling values,
- and a switching element (16; 71) which, controlled by the switching signal of the arithmetic circuit (12; 61, 64, 67), feeds the delayed sampling values from the delay member (9; 321) to a subsequent circuit arrangement (21) when the mean values from the low-pass filter (5; 32, 36, 41, 45, 50, 53, 57) and the delayed sampling values from the delay member (9; 321) differ from one another by more than a preset amount, and otherwise feeds the mean values to the subsequent circuit arrangment (21).

6. A circuit arrangement as claimed in Claim 5, characterized in that the low-pass filter (5; 32, 36, 41, 45, 50, 53, 57) is controlled by the switching signal in such a way that the sampling values replace the corresponding positions of the mean values.

7. A circuit arrangement for implementing the method as claimed in Claim 4, characterized by
- a low-pass filter (5; 32, 36, 41, 45, 50, 53, 57) to which the sampling values of the digitised signal are fed and which delivers associated mean values formed from consecutive sampling values, and
- a delay member (9; 321) to which the sampling values of the digitised signal are fed and in which they are delayed by a time which corresponds at least substantially to the group delay of the low-pass filter (5; 32, 36, 41, 45, 50, 53, 57),
- for the signals representing binary numbers and having an increased resolution, the most significant positions, which are required for the desired minimum resolution of the digitised signal, being taken from the corresponding most significant positions of the sampling values supplied by the delay member (9; 321) and the positions following these most significant positions being taken from the mean values supplied by the low-pass filter (5; 32, 36, 41, 45, 50, 53, 57).

8. A circuit arrangement as claimed in Claim 7, characterized by a comparator circuit (79) to which the delayed sampling values from the delay member (9; 321) and the mean values from the lowpass filter (5; 32, 36, 41, 45, 50, 53, 57) are fed and which delivers a comparison signal by which the low-pass filter (5; 32, 36, 41, 45, 50, 53, 57) is controlled in such a way that the mean values coincide with the associated sampling values in the most significant positions of the binary numbers required for the minimum resolution.

9. A circuit arrangement as claimed in Claim 5 or 7, characterized in that the low-pass filter (5; 32, 36, 41, 45, 50, 53, 57) includes:
- a delay arrangement (32) with an input (31) to which the sampling values are fed, and an output (35) which delivers sampling values delayed by a mean-taking period,
- a subtractor (36) to the positive input (37) of which are fed the sampling values and to the negative input (38) the sampling values delayed by a mean-taking period and which forms difference values from the values fed to it, as well as
- an accumulator (41, 50) in which the difference values are summated.

10. A circuit arrangement as claimed in Claim 9, characterized in that the delay member (9; 321) is formed from part of the delay arrangement (32).

11. A circuit arrangement as claimed in Claim 9 with an accumulator (41, 50) formed in a manner known in the art from a storage arrangement (50) which is fed back via an adder (41), characterized by a second switching element (45) which is inserted in the lead from the adder member (41) to the storage arrangement (50) and by means of which the sum signal supplied by the adder member (41) or the sampling values delayed by the delay member (9; 321) are fed to the storage arrangement (50) depending on the deviation of the sampling values from the associated mean values.

12. A circuit arrangement as claimed in Claim 11, characterized in that only the number of most significant positions of the sum signal supplied by the adder member (41), which is equal to the number of the positions of the sampling values delayed by the delay member (9; 321) is fed to the second switching element (45), and the subsequent positons of the sum signal are fed directly to the storage arrangement (50).

13. A circuit arrangement as claimed in Claim 9, characterized in that the signals summated in the accumulator (41, 50) are supplied by the latter via a divider (76) as mean values from the low-pass filter (5; 32, 36, 41, 45, 50, 53, 57).

14. A circuit arrangement as claimed in Claim 9, characterized in that the signals summated in the accumulator (41, 50) are supplied as mean values from the low-pass filter (5; 32, 36, 41, 45, 50, 53, 57), only with a number of most significant positions, which is equal to the number of the positions of the sampling values, augmented by a number of additional positions to increase the resolution.

15. A circuit arrangement as claimed in Claim 9, characterized in that the signals supplied by the accumulator (41, 50) are supplied via a further low-pass element (53, 57) as mean values from the low-pass filter (5; 32, 36, 41, 45, 50, 53, 57).

16. A circuit arrangement as claimed in Claim 15, characterized in that the further low-pass element (53, 57) includes a further adder member (53) to which the signals fed to its first input (52) are also fed to its second input (54) delayed by a further time delay and from the output of which (55) the output signal of the further low-pass element (53, 57) is taken.

**Revendications**

1. Procédé pour augmenter la résolution d'un signal numérisé dépendant du temps, en particulier d'un signal d'image numérique, qui est constitué d'une succession de valeurs d'échantillonnage, suivant lequel, pour une valeur d'échantillonnage, on forme, à partir de celle-ci et d'au moins une valeur d'échantillonnage suivante et/ou précédente, une valeur moyenne associée dont la résolution est supérieure et on remplace la valeur d'échantillonnage par la valeur moyenne associée, caractérisé en ce qu'une valeur d'échantillonnage n'est remplacée par la valeur moyenne associée que lorsque ces deux valeurs ne diffèrent tout au plus que d'une quantité prédéfinie.

2. Procédé suivant la revendication 1, caractérisé en ce que la valeur moyenne est obtenue par filtrage passe-bas.

3. Procédé suivant la revendication 1 ou 2, caractérisé en ce que les valeurs d'échantillonnage ont la forme de signaux représentant des nombres binaires à plusieurs positions.

4. Procédé suivant la revendication 3, caractérisé en ce qu'un nombre de signaux représentant des positions situées en tête des nombres binaires, nécessaire pour un minimum souhaité de la résolution du signal numérisé, est prélevé sur les valeurs d'échantillonnage, et des positions suivant les positions situées en tête et prévues pour augmenter la résolution, sont prélevées sur les valeurs moyennes.

5. Montage de circuit pour réaliser le procédé suivant la revendication 1, caractérisé par:
- un filtre passe-bas (5: 32, 36, 41,. 45, 50, 53, 57) auquel les valeurs d'échantillonnage du signal numérisé sont appliquées et qui fournit des valeurs moyennes associées, formées à partir de valeurs d'échantillonnage successives;
- une ligne à retard (9; 321) à laquelle sont appliquées les valeurs d'échantillonnage du signal numérisé et dans laquelle ces valeurs sont retardées d'un temps de parcours qui correspond au moins approximativement au temps de parcours de groupe du filtre passe-bas (5; 32, 36, 41, 45, 50, 53, 57);
- un circuit de calcul (12; 61, 64, 67), auquel les valeurs moyennes du filtre passe-bas (5; 32, 36, 41, 45, 50, 53, 57) et les valeurs d'échantillonnage retardées de la ligne à retard (9; 321) sont appliquées et qui fournit un signal de commutation dépendant de la différence entre les valeurs moyennes et les valeurs d'échantillonnage associées;
- et un élément de commutation (16; 71) qui, sous la commande du signal de commutation du circuit de calcul (12; 61, 64, 67) applique les valeurs d'échantillonnage retardées de la ligne à retard (9; 321) à un montage de circuit suivant (21) lorsque les valeurs moyennes du filtre passe-bas (5; 32, 36, 41, 45, 50, 53, 57) et les valeurs d'échantillonnage retardées de la ligne à retard (9; 321) diffèrent de plus d'une grandeur prédéfinie et sinon, transmet les valeurs moyennes au montage de circuit suivant (21).

6. Montage de circuit suivant la revendication 5, caractérisé en ce que le filtre passe-bas (5; 32, 36, 41, 45, 50, 53, 57) est commandé par le signal de commutation d'une manière telle que les valeurs d'échantillonnage remplacent les positions correspondantes des valeurs moyennes.

7. Montage de circuit pour réaliser le procédé de l'invention suivant la revendication 4, caractérisé par:
- un filtre passe-bas (5; 32, 36, 41, 45, 50, 53, 57) auquel les valeurs d'échantillonnage du signal numérisé sont appliquées et qui fournit des valeurs moyennes associees, formées à partir de valeurs d'échantillonnage successives; et
- une ligne à retard (9; 321) à laquelle les valeurs d'échantillonnage du signal numérisé sont appliquées et dans laquelle elles sont retardées d'un temps de parcours qui correspond au moins approximativement au temps de parcours de groupe du filtre passe-bas (5; 32, 36, 41, 45, 50, 53, 57),
- les positions en tête, qui sont nécessaires pour le minimum de la résolution du signal numérisé, des signaux qui représentent des nombres binaires et dont la résolution a été augmentée sont prélevées sur les positions en tête correspondantes des valeurs d'échantillonnage fournies par la ligne à retard (9; 321) et les positions suivant ces positions en tête sont prélevées sur les positions suivantes correspondantes des valeurs moyennes fournies par le filtre passe-bas (5; 32, 36, 41, 45, 50, 53, 57).

8. Montage de circuit suivant la revendication 7, caractérisé par un circuit comparateur (79) auquel sont appliquées les valeurs d'échantillonnage retardées de la ligne à retard (9; 321) et les valeurs moyennes du filtre passe-bas (5; 32, 36, 41, 45, 50, 53, 57) et qui fournit un signal de comparaison par lequel le filtre passe-bas (5; 32, 36, 41, 45, 50, 53, 57) est commandé d'une manière telle que les valeurs moyennes correspondent aux valeurs d'échantillonnage associées dans les positions en tête des nombres binaires qui sont nécessaires pour le minimum de la résolution.

9. Montage de circuit suivant la revendication 5 ou 7, caractérisé en ce que le filtre passe-bas (5; 32, 36, 41, 45, 50, 53, 57) comprend:
- un dispositif à retard (32) présentant une entrée (31) à laquelle sont appliquées les valeurs d'échantillonnage et une sortie (35) qui fournit des valeurs d'échantillonnage retardées d'un temps d'établissement de moyenne;
- un élément soustracteur (36) à l'entrée positive (37) duquel sont appliquées les valeurs d'échantillonnage et à l'entrée négative (38) duquel sont appliquées les valeurs d'échantillonnage retardées d'un temps d'établissement de moyenne et qui forme des valeurs de différence à partir des valeurs qui lui sont fournies, ainsi que

- un dispositif accumulateur (41, 50), dans lequel les valeurs de différence sont sommées.

10. Montage de circuit suivant la revendication 9,

caractérisé en ce que l'élément à retard (9; 321) est formé par une partie du dispositif à retard (32).

11. Montage de circuit suivant la revendication 9, comprenant un dispositif d'accumulation (41, 50) formé d'une manière connue d'un dispositif de stockage (50) couplé en retour par l'intermédiaire d'un élément additionneur (41),

caractérisé par un second élément de commutation (45) qui est inséré dans l'alimentation allant de l'élément additionneur (41) au dispositif de stockage (50) et qui applique soit le signal de somme fourni par l'élément additionneur (41), soit les valeurs d'échantillonnage retardées provenant de l'élément à retard (9; 321) au dispositif de stockage (50), en fonction de la différence entre les valeurs d'échantillonnage et les valeurs moyennes associées.

12. Montage de circuit suivant la revendication 11,

caractérisé en ce que le second élément de commutation (45) ne reçoit que le nombre de positions en tête du signal de somme fourni par l'élément additionneur (41) qui est égal au nombre de positions des valeurs d'échantillonnage retardées par l'élément à retard (9; 321) et que les positions suivantes du signal de somme sont transférées directement au dispositif de stockage (50).

13. Montage de circuit suivant la revendication 9,

caractérisé en ce que les signaux sommés dans le dispositif d'accumulation (41, 50) sont fournis par celui-ci, par l'intermédiaire d'un élément diviseur (76), en tant que valeurs moyennes du filtre passe-bas (5; 32, 36, 41, 45, 50, 53, 57).

14. Montage de circuit suivant la revendication 9,

caractérisé en ce que les signaux sommés dans le dispositif d'accumulation (41, 50) ne sont fournis à titre de valeurs moyennes par le filtre passe-bas (5; 32, 36, 41, 45, 50, 53, 57) qu'avec un nombre de positions en tête qui est égal au nombre de positions des valeurs d'échantillonnage, augmenté d'un nombre de positions supplémentaires prévues pour augmenter la résolution.

15. Montage de circuit suivant la revendication 9,

caractérisé en ce que le filtre passe-bas (5; 32, 36, 41, 45, 50, 53, 57) fournit, en tant que valeurs moyennes, les signaux fournis par le dispositif d'accumulation (41, 50), par l'intermédiaire d'un autre elément passe-bas (53, 57).

16. Montage de circuit suivant la revendication 15,

caractérisé en ce que l'autre élément passe-bas (53, 57) comprend un autre élément additionneur (53), qui reçoit les signaux appliqués à sa première entrée (52) également à sa seconde entrée (54), avec un retard d'un nouveau temps de parcours, et sur la sortie (55) duquel est prélevé le signal de sortie de l'autre élément passe-bas (53, 57).

Fig.1

Fig.2b

Fig.2c

EP 0 148 528 B1

Fig.2a